(19) Europäisches Patentamt

European Patent Office

Office européen des brevets

(11) Publication number: **0 320 987 B1**

(12) # EUROPEAN PATENT SPECIFICATION

(45) Date of publication of patent specification: **15.09.93**

(51) Int. Cl.⁵: **C05G 3/10, B01J 2/30**

(21) Application number: **88121145.2**

(22) Date of filing: **16.12.88**

(54) **Conditioning agent for nitrate-containing fertilizer.**

(30) Priority: **18.12.87 NO 875302**

(43) Date of publication of application:
**21.06.89 Bulletin 89/25**

(45) Publication of the grant of the patent:
**15.09.93 Bulletin 93/37**

(84) Designated Contracting States:
**AT BE DE ES FR GB GR IT NL SE**

(56) References cited:
**DE-A- 1 467 386**
**FR-A- 2 214 517**
**FR-A- 2 238 531**
**US-A- 3 288 587**
**US-A- 3 300 294**

**CHEMICAL ABSTRACTS, vol. 92, no. 7, Feb-
ruary 1980, page 572, abstract no. 57456g,
Columbus, Ohio, US; & IN-A-1 37 497
(COUNCIL OF SCIENTIFIC AND INDUSTRIAL
RESEARCH (INDIA)) 02-08-1975**

(73) Proprietor: **NORSK HYDRO A.S.
Bygdoy Allé 2
N-0257 Oslo 2(NO)**

(72) Inventor: **Obrestad, Torstein
Helgja
N-3730 Ulefoss(NO)**
Inventor: **Pettersen, Jarl Markus
Sleinevn. 73
N-3250 Larvik(NO)**
Inventor: **Palmgren, Odd
Lyngvn. 28
N-3900 Porsgrunn(NO)**
Inventor: **Syversen, Ulf Rune
Myragt. 24
N-3900 Porsgrunn(NO)**

(74) Representative: **Huber, Bernhard, Dipl.-Chem.
et al
Patentanwälte H. Weickmann, Dr. K. Fincke
F.A. Weickmann, B. Huber Dr. H. Liska, Dr. J.
Prechtel Kopernikusstrasse 9 Postfach 86 08
20
D-81635 München (DE)**

Rank Xerox (UK) Business Services
(3.10/3.6/3.3.1)

## Description

The present invention relates to a conditioning agent for reducing dust formation and hygroscopicity of nitrate-containing fertilizer, especially nitrate of lime. The conditioning agent comprises wax and mineral oil. By application of this agent the fertilizer particles are given a coating of 0.1-1.0 weight%.

It has been known for a long time that hygroscopic fertilizers like NP-fertilizers and especially nitrate of lime (NL) give problems when exposed to moisture. Several coating agents for different types of fertilizers have been developed for reducing this problem. Another problem which might arise, especially during handling of the fertilizer, is dust formation. There can be several reasons for this dust formation, for instance that the fertilizer particles are uneven. Due to the abration the particles are exposed to during handling this roughness will wear off, and thereby is dust formed. There are also developed some coatings for reducing dust formation, but these coatings must to a great extent be adjusted according to the type of fertilizer which shall be treated.

Lately it has become increasingly important to solve the problem of dust formation. Fertilizers are to an increasing extent transported in bulk, and this results in large mechanical wear on the surface of the fertilizer particles. In addition the environmental regulation with regard to dust formation during loading and unloading requires a solution of the problem. The mechanical wear may cause formation of refuse, i.e. large pieces are broken off the particles, and in addition there will be fine dust. It is especially the fine dust particles which remain floating in the air for some time, which again results in the unpleasant fly dust.

As mentioned above NL causes special problems because of its high hygroscopicity, but in addition one has also experienced that dust formation can be a problem. The latter problem is greatest on granulated fertilizer, which has a more uneven surface than the prilled fertilizer. A similar problem will also be present for other fertilizers like for instance calcium ammonium nitrate (CAN). Solution of the problems with regard to NL will accordingly most likely comprise solution of corresponding problems for similar types of fertilizer.

With regard to the problem related to hygroscopicity the applicant has been able to reduce substantially moisture absorption of hygroscopic fertilizers like nitrate of lime. This is further described in Norwegian patent No. 143.938. The patent relates to application of a conditioning agent containing 5-20 weight% microcrystalline wax, 5-30 weight% paraffin wax and 60-80 weight% mineral oil having a boiling point of 300-400 °C. Application of this agent reduces the moisture absorption for instance by about 70% at 25 °C and 70% relative humidity. It has, however, been found that application of this agent does not solve the problem with regard to dusting, even if the agent is applied in relatively large amounts. Application of sufficient amounts of the agent could possibly reduce the dust formation, but then the fertilizer particles would be too sticky. Further, such coating of the particles would be too expensive.

A conditioning agent which in addition to reducing the moisture absorption also can reduce the dust formation is also developed by the applicant.

The conditioning agent according to said application contains in addition to paraffin and microcrystalline wax and oil also 2-10 weight% of a polyethylene wax having average molecular weight of 1.500-3.000. Coating of particles with this conditioning agent has, however, been found to function best if the agent is applied in two stages, and then with a coating according to the above mentioned Norwegian patent as an outer coating to secure a low absorption of moisture. Two-step coating is both from a production point of view and economically not very attractive. Even if this new coating reduces substantially both moisture absorption and dust formation it is accordingly still need for an improved conditioning agent which in addition can be applied on the fertilizer particles more rationally.

The object of the present invention was to arrive at a conditioning agent which reduces the dust formation, especially formation of fine dust, during handling of the fertilizer particles, and at the same time reduces the moisture absorption at least as much as application of known conditioning agents will do. A further object was that the fertilizer particles should be coated by this agent in one step only.

According to the invention this object is achieved by providing a conditioning agent for reducing dust formation and hygroscopicity of nitrate-containing fertilizer, which is characterized in that the conditioning agent contains 10-60 weight% wax, 30-90 weight% oil and 0.3-10.0 weight% of a high molecular viscoelastic elastomer which is soluble in oil and has an average molecular weight of 30.000-5.000.000. In a preferred embodiment of the invention the elastomer contained in the conditioning agent is polyisobutylene having an average molecular weight of 40.000-1.300.000 and that it comprises 0.5-3.0 weight% of the conditioning agent. A further embodiment of the invention provides that the conditioning agent contains 40-60 weight% wax which is a mixture of paraffin wax and polyethylene wax and microcrystalline wax, 40-55 weight% mineral oil and 0.5-3.0 weight% polyisobutylene. In a further preferred embodiment the elastomer may as well consist of styrene-isopropene-styrene block copolymers.

According to experience it was granulated NL which gave the greatest problem both with regard to dust formation and moisture absorption. Therefore the inventors started by developing a conditioning agent for NL, and then to find out if it also would be suitable for other nitrate-containing fertilizers. As mentioned above one already had conditioning agents which could reduce the moisture absorption sufficiently. The main question was therefore which special requirements had to be fulfilled for the dust reducing agent. One started by listing the following requirements for the conditioning agent:

1. The coating by this agent should give the particles a smooth surface such that friction and thereby dust formation was reduced, but not that slippery a surface that the sliding angle became less than 28°C.

2. The coating should be most elastic such that it did not crack during mechanical wear, and it should at least be able to bind fine dust formed.

3. The agent should reduce the moisture absorption of the particles at least as well as the known agents (Norwegian patent No. 143.938).

4. It should fulfil the the technical requirement which makes it possible to apply it in one step at suitable process condition with regard to temperature (about 40°C for NL).

5. Fertilizer particles coated with the conditioning agent should be completely soluble after at least three days subsequent to spreading, and the conditioning agent should be degradable in the soil and not be toxic.

One started by testing conditioning agents which according to the above criteria could be expected to reduce the dust formation as one could handle the problems with regard to moisture absorption. The elasticity of the coating was also an important criteria, and one therefore tried to apply a rubbery coating comprising a high molecular elastomer. It was then made a conditioning agent comprising about 10% emulsifier, 85-89% mineral oil and 1-5% elastomer, and this was applied on granulated NL-particles. The coated particles were then tested with regard to dust formation and moisture absorption, and the results of these tests are given in Table 1. A known conditioning agent stated as B refers to Norwegian patent No. 143.938.

The dust is measured in mg per kg particles. "Dust 1" means dust which is released after one minute in a fluidizing apparatus and is the dust which is in the fertilizer. "Dust 2" refers to dust formed during wear of the particle surface subsequent to a standard tilting test. A sample of the fertilizer is placed in a tube and tilted back and forward 20, possibly 40 times. This test simulates wear during bulk transport. The particles were given a coating of 0.2% and the moisture absorption reduction relative to unconditioned particles was measured after three hours.

Table 1

| Conditioning agent | Dust (mg/kg) | | Moisture absorption (% reduction) 3 hours |
|---|---|---|---|
| | Dust 1 | Dust 2 | |
| Oil + 10% emulsifier + 5% elastomer | 5 | 20 | 26 |
| Oil + elastomer | 2 | 10 | 15 |
| Oil + 10% emulsifier + 1% elastomer | 20 | 50 | 32 |
| B | 20 | 180 | 95 |

The oil used was heavy oil destillate and the elastomer was a high molecular polyisobutylene.
The particles were given a coating of 0.2 weight%.
The coating temperature of NL was 40°C.
It was also applied an oil soluble sulphonate-based emulsifier.

As can be seen from the table, the results with regard to dust formation were excellent, but the reduction in moisture absorption was unacceptably low. The elastomer/emulsifier system seemed to give the desired viscoelastic properties, but the emulsifier/oil gel does not form an acceptable moisture barrier.

As the known agent B worked acceptably with regard to reduction of moisture absorption, the inventors tried to modify this by adding an elastomer and/or an emulsifier. It was then carried out several tests to find out if this idea worked, and the results are given in Table 2.

Table 2

| Conditioning agent | Dust (mg/kg) | | Moisture absorption (% reduction) 3 hours |
|---|---|---|---|
| | Dust 1 | Dust 2 | |
| B | 30 | 430 | 92 |
| B with 0.7% elastomer | 10 | 220 | 95 |
| B with 7% emulsifier | 20 | 400 | 92 |
| B with 0.7% elastomer and 7% emulsifier | 2 | 190 | 94 |
| Unconditioned | 590 | 1580 | 0 |

The conditioning agent B is modified with high molecular elastomer and/or sulphonate emulsifier, respectively.

Tests with regard to moisture absorption were carried out at 25°C and 60% Rf.

The particles were given a coating of 0.2 weight% at a product temperature of 40°C.

As can be seen from Table 2 it was the elastomer which was the main contributor for reducing the dust formation, while the effect of the additional emulsifier seemed to be minimal. It was therefore decided that the emulsifier should be substituted with wax during the further development of the agent. This comprised to find out more about the most efficient relation between the amounts of wax, oil and elastomer and to find out which elastomers were most suitable for the purpose.

One soon found that one did not have complete freedom with regard to the relative amounts of the components in the conditioning agent. Thus the solidification point of the conditioning agent would increase when the amount of wax increased and the amount of oil decreased. The upper limit would therefore in fact be a practical limit of about 60 weight%. In certain cases, however, one would be able to apply as little as 10 weight% wax and still obtain the desired effect.

Mineral oil is the preferred type of oil, but synthetic oil having the same composition can also be applied. The amount of oil can vary within wide limits, but should for practical reasons be between 30-90 weight%.

Relatively large amounts of elastomer will result in strong increase of viscosity. In order to get an agent which in practice can be supplied on to the particles at the actual operating temperature, one had accordingly to operate within certain limits for each component. Some of the results from the experiments with different ratios between the amounts are given in Table 3. During these experiments it was used polyisobutylene with an average viscosity mol-weight of about 1.300.000 as elastomer and the same types of wax and oil as in agent B according to Norwegian patent No. 143.938. The reduction in moisture absorption was measured after five hours. The particles were coated by 0.2 weight% of the conditioning agent at 40°C.

Table 3

| Conditioning agent | | | Dust (mg/kg) | | Moisture absorp. (% reduction) 5 hours |
|---|---|---|---|---|---|
| % Wax | % Oil | % Elastomer | Dust 1 | Dust 2 | |
| 30 | 70 | 0 | 50 | 480 | 96 |
| 30 | 69.65 | 0.35 | 40 | 260 | 96 |
| 30 | 69.30 | 0.70 | 10 | 140 | 91 |
| 30 | 68.60 | 1.40 | 15 | 170 | 94 |
| 30 | 66.50 | 3.50 | 45 | 120 | 94 |
| 50 | 50 | 0 | 55 | 250 | 96 |
| 50 | 49.75 | 0.25 | 15 | 170 | 95 |
| 50 | 49.50 | 0.50 | 20 | 150 | 96 |
| 50 | 49 | 1.0 | 10 | 100 | 93 |
| 50 | 47.5 | 2.50 | 5 | 110 | 92 |
| Undonditioned | | | 720 | 1800 | |

Table 3 shows the results for the known conditioning agent B modified by additional high molecular elastomer, and tested according to standard conditions.

The particles were given a coating of 0.2 weight% at 40°C.

Table 3 shows that the dust formation was substantially reduced when the conditioning agent contained elastomer. Further one got about the same reduction in moisture absorption as by the known conditioning agent B. When the amount of elastomer was substantially larger than 1%, the viscosity increased strongly, but the reduction in dust formation was hardly influenced.

It was now clear that one had arrived at a type of conditioning agent which fulfilled the requirements both with regard to reduction in dust formation and moisture absorption.

It was therefore started experiments for determining which types of elastomer were applicable and if the types of wax which were used in the conditioning agent B were the most suitable ones. First one studied whether the molecular weight of the elastomer was a critical parameter. During these experiments polyisobutylene having varying molecular weights were used, i.e. with average viscosity molecular weights of 40.000, 85.000 and 1.300.000, respectively. The conditioning agent also contained polyethylene wax. It was then found that the dust reducing properties of the agent increased with increasing molecular weight for the elastomer in the tested range. The next step in the experiments was to test out different types of elastomer. It was made up several different mixtures containing 2.5% elastomer, 45% wax and 47.5% mineral oil, and granulated fertilizer particles were then coated with these different conditioning agents and tested with regard to reduction of dust formation. The results of these experiments are given in Table 4.

Table 4

| Elastomer | Dust number mg dust/kg coated particles |
|---|---|
| polyisobutylene | 100 |
| styrene-butadiene-styrene block copolymere | 196 |
| styrene-isopren-styrene block copolymere | 110 |
| styrene-ethylene/butylene styrene block copolymere | 142 |
| styrene-butadiene copolymere | 154 |
| uncoated fertilizer | 1216 |

Table 4 shows that a coating containing the tested elastomer will reduce the dust formation substantially. Further investigations showed the following requirements regarding the elastomer component which also can be defined as a highly molecular polymere:

a) The elastomer should be oil soluble.

b) It should behave viscoelasticly in an oil solution.

c) It should have an average viscosity molecular weight of 30.000-5.000.000.

It was further found that the conditioning agent for the present purpose should contain 0.3-0.0 weight% elastomer. Examples of suitable elastomers are: polyisobutylene, styrene-butadiene-styrene, block copolymere, styrene-isopren-styrene block copolymere, styrene-ethylene/butylene block copolymere, styrene-butadiene copolymere.

Tests showed that the most suitable types of wax-oil component in the conditioning agent were the same as for the known conditioning agent B. The relation between wax and oil in the new conditioning agent will, however, have a somewhat different optimum. Thus it was found that for a coating on nitrate of lime it was most suitable to use a conditioning agent containing 40-60 weight% wax and 40-55 weight% mineral oil.

The special features of the invention and its scope are as defined by the attached patent claims.

Application of conditioning agent according to the invention and the effect of this will now be further described in the following examples.

Example 1

This example shows application of a conditioning agent according to the invention compared with a known conditioning agent according to the above stated Norwegian patent on calcium ammonium nitrate (CAN) and granulated NPK.

| Type of fertilizer | Conditioning agent | Dust, mg/kg | | Moisture absorption |
|---|---|---|---|---|
| | | Dust 1 | Dust 2 | |
| CAN | Unconditioned | 10 | 10 | 2.37% |
| | 0.3% A | 0 | 0 | 0.99% |
| | 0.2% B | 0 | 0 | 1.37% |
| NPK | Unconditioned | 144 | 800 | 1.5% |
| | 0.3% A | 10 | 23 | 1.00% |

Moisture absorption was measured at 67% relative humidity and 20°C after 5 hours.
Dust was measured in mg per kg particles.

Example 2

This example shows the effect of conditioning agent (A) according to the invention compared with known conditioning agents applied on ammonium nitrate (AN).

| Conditioning agent | Dust content mg/kg | | Moisture absorp. % | Caking tendency |
|---|---|---|---|---|
| | Dust 1 | Dust 2 | | |
| A | 20 | 170 | 1.68 | 1530 |
| B | 30 | 200 | 1.88 | 1630 |
| C | 40 | 360 | 1.52 | 720 |
| D | 36 | 230 | 1.74 | 2070 |
| E | 160 | 420 | 1.63 | 600 |
| Unconditioned | | | 2.55 | 2270 |

It was supplied 0.2 weight% conditioning agent.
A caking test was performed at 25°C, 70% relative humidity after 24 hours.
Moisture absorption was measured at the same conditions after 5 hours.
The conditioning agents C-E er commercial agents especially intended for reducing the absorption of moisture and caking.

Example 3

This example shows the effect of conditioning agent (A) according to the invention compared with the known agent B according to Norwegian patent No. 143.938 applied on prilled nitrophosphate (NP). The test gave no effect with regard to dust, and therefore it is only the results for absorption of moisture as a function of time measured at 60% relative humidity at 25°C which are stated. The first column states the reduction of moisture absorption in per cent, and the second column weight per cent moisture absorption. The amount of conditioning agent is stated in weight per cent of coated particles.

| Conditioning agent | | Moisture absorption | | | | | | | |
|---|---|---|---|---|---|---|---|---|---|
| | | 1 hour | | 3 hours | | 5 hours | | 24 hours | |
| **Amount** | | | | | | | | | |
| 0.1 | A | 78.4 | 0.08 | 81.3 | 0.2 | 78.8 | 0.8 | 62.9 | 0.53 |
| 0.2 | A | 86.5 | 0.05 | 85.9 | 0.09 | 83.5 | 0.14 | 72.7 | 0.39 |
| 0.3 | A | 86.5 | 0.05 | 89.1 | 0.07 | 88.2 | 0.10 | 81.1 | 0.27 |
| 0.1 | B | 81.1 | 0.07 | 75.0 | 0.16 | 67.1 | 0.28 | 18.9 | 1.16 |
| 0.2 | B | 86.5 | 0.05 | 87.5 | 0.08 | 83.5 | 0.14 | 62.9 | 0.53 |
| 0.3 | B | 89.8 | 0.04 | 89.1 | 0.07 | 87.1 | 0.11 | 78.3 | 0.31 |
| Unconditioned | | | 0.37 | | 0.64 | | 0.85 | | 1.43 |

The moisture absorption is given as reduced moisture absorption for conditioned fertilizer relatively unconditioned fertilizer. The last column below each time range states the weight per cent moisture absorbed.

Example 4

This example shows the effect with regard to dust formation when the conditioning agent according to the invention is supplied compared to conditioning according to Norwegian patent No. 143.938 of nitrate of lime particles.

| Conditioning agent | 1 day | | | 7 days | | | 15 days | | |
|---|---|---|---|---|---|---|---|---|---|
| | a | b | c | a | b | c | a | b | c |
| 0.3% B | 53 | 984 | 1513 | 74 | 1208 | 1554 | 97 | 1492 | 1649 |
| 0.2% A | 30 | 558 | 877 | 52 | 660 | 980 | 81 | 930 | 1127 |
| 0.3% A | 9 | 84 | 234 | 23 | 112 | 335 | 17 | 218 | 540 |
| Uncond. | 118 | 2319 | | 308 | 2489 | | 453 | 2467 | |
| 0.3% B | 43 | 382 | 485 | 126 | 787 | 981 | 139 | 984 | 1069 |
| 0.2% A | 16 | 100 | 206 | 32 | 157 | 285 | 75 | 321 | 427 |
| 0.3% A | 2 | 16 | 21 | 5 | 12 | 21 | 17 | 52 | 82 |
| Uncond. | 274 | 1761 | | 430 | 2197 | | 500 | 2104 | |
| 0.3% B | 33 | 761 | 837 | 31 | 1083 | 1143 | 102 | 1227 | 1525 |
| 0.2% A | 13 | 431 | 636 | 28 | 795 | 874 | 58 | 724 | 919 |
| 0.3% A | 7 | 126 | 223 | 23 | 354 | 642 | 28 | 182 | 495 |
| Uncond. | 144 | 1792 | | 276 | 1794 | | 349 | 2341 | |
| 0.3% A | 40 | 190 | | 20 | 210 | | | | |
| 0.3% B | 51 | 780 | | 80 | 813 | | | | |

a) Dust in sample, mg/kg b) Dust produced after tilting 40 times, mg/kg c) Dust produced after 40 additional tilts, mg/kg

As it can be seen from the above table the dust formation was substantially less when the conditioning agent according to the invention was used than when the known agent B was used.

By the present invention one has got a conditioning agent which reduces substantially the dust formation during handling of NL and nitrate-containing fertilizers. This is obtained by coating the fertilizer particles in one step only and without applying a larger amount of conditioning agent than usually. The new conditioning agent also gives as large reduction in absorption of moisture as the known agent according to Norwegian patent No. 143.938. By applying the new agent one will further get a coating which is that elastic that it does not crack during handling of the fertilizer. Thus the inventors have by developing the agent according to the invention managed to fulfil the previously stated criteria 1-5 which were required for meeting the object of the invention.

## Claims

1. Conditioning agent for reducing dust formation and hygroscopicity of nitrate-containing fertilizer, especially nitrate of lime, and where the agent comprises wax and mineral oil or synthetic oil,
   **characterized in that**
   the conditioning agent contains 10-60 weight% wax, 30-90 weight% oil and 0.3-10.0 weight% of a high molecular viscoelastic elastomer which is soluble in oil and has an average molecular weight of 30.000-5.000.000.

2. Conditioning agent according to claim 1,
   **characterized in that**
   the elastomer applied is polyisobutylene having an average molecular weight of 40.000-1.300.000 and that it comprises 0.5-3.0 weight% of the conditioning agent.

3. Conditioning agent according to claims 1 and 2,
   **characterized in that**
   it contains 40-60 weight% wax which is a mixture of paraffin wax and polyethylene wax and microcrystalline wax, 40-55 weight% mineral oil and 0.5-3.0 weight% polyisobutylene.

4. Conditioning agent according to claim 1,
   **characterized in that**
   the elastomer applied is styrene-isopren-styrene block copolymere.

**Patentansprüche**

1. Konditionierungsmittel zur Verringerung der Staubbildung und Hygroskopizität von Nitrat, insbesondere Calciumnitrat enthaltenden Düngemitteln, worin das Mittel Wachs und Mineralöl oder synthetisches Öl umfaßt,
   **dadurch gekennzeichnet**,
   daß das Konditionierungsmittel 10 bis 60 Gew.-% Wachs, 30 bis 90 Gew.-% Öl und 0,3 bis 10,0 Gew.-% eines hoch-molekularen viskoelastischen Elastomers, das in Öl löslich ist, und ein durchschnittliches Molekulargewicht von 30.000 bis 5.000.000 hat, enthält.

2. Konditionierungsmittel nach Anspruch 1,
   **dadurch gekennzeichnet,**
   daß das verwendete Elastomer Polyisobutylen ist mit einem durchschnittlichen Molekulargewicht von 40.000 bis 1.300.000, und daß es 0,5 bis 3,0 Gew.-% des Konditionierungsmittels umfaßt.

3. Konditionierungsmittel nach Anspruch 1 und 2,
   **dadurch gekennzeichnet,**
   daß es 40 bis 60 Gew.-% Wachs, das eine Mischung aus Paraffinwachs und Polyethylenwachs und mikrokristallinem Wachs ist, 40 bis 55 Gew.-% Mineralöl und 0,5 bis 3,0 Gew.-% Polyisobutylen enthält.

4. Konditionierungsmittel nach Anspruch 1,
   **dadurch gekennzeichnet**,
   daß das verwendete Elastomer ein Styrol-Isopren-Styrol-Blockcopolymer ist.

**Revendications**

1. Agent de mise en état ou de conditionnement pour diminuer la formation de la poussière et abaisser l'hygroscopicité d'un engrais contenant du nitrate, en particulier du nitrate de chaux, cet agent comprenant de la cire et de l'huile minérale ou de l'huile synthétique, agent caractérisé en ce qu'il contient 10 à 60 % en poids de cire, 30 à 90 % en poids d'huile et 0,3 à 10,0 % en poids d'un élastomère viscoélastique à poids moléculaire élevé, qui est soluble dans de l'huile et a un poids moléculaire moyen compris entre 30 000 et 5 000 000.

2. Agent de conditionnement selon la revendication 1, caractérisé en ce que l'élastomère appliqué est du polyisobutylène ayant un poids moléculaire moyen compris entre 40 000 et 1 300 000 et qui forme 0,5 à 3,0 % du poids de l'agent de conditionnement.

3. Agent de conditionnement selon les revendications 1 et 2, caractérisé en ce qu'il contient 40 à 60 % en poids d'une cire qui est un mélange de cire de paraffine et de cire de polyéthylène ainsi que de cire microcristalline, 40 à 55 % en poids d'une huile minérale et 0,5 à 3,0 % en poids de polyisobutylène.

4. Agent de conditionnement selon la revendication 1, caractérisé en ce que l'élastomère appliqué est un copolymère à blocs ou longues séquences styrène-isoprène-styrène.

9